# EUROPEAN PATENT SPECIFICATION

(11) **EP 0 602 011 B1**
(45) Date of publication and mention of the grant of the patent: **14.05.1997**
(21) Application number: 94102393.9
(22) Date of filing: 15.06.1990
(51) Int. Cl.: B62C 1/08

(54) **Carriage adapted for training horses**
Kutsche zum Trainieren von Pferden
Fiacre pour entraîner des chevaux

(30) Priority: 16.06.1989 SE 8902169
(43) Date of publication of application: 15.06.1994
(62) Divisional of application: 90909813.9
(73) Proprietor: SUNDBERG, Stig, S-818 00 Valbo (SE)
(72) Inventor: SUNDBERG, Stig, S-818 00 Valbo (SE)
(74) Representative: Bjerkén, Jarl Hakan

(56) References cited:
- EP-A- 0 085 962
- DE-C- 3 335 895
- SE-B- 420 185
- SE-B- 429 948

## Description

This invention is relative to a carriage adapted for training horses and comprising at least one wheel, which is put into a rotation by its contact with the ground when the carriage is driven and which is mounted on an axle and secured against relative rotation thereto and drivingly connected to a fluid pump arranged to exert a resistance to rotation of the wheel, a body or housing of the fluid pump being attached to the carriage.

A carriage of this nature is described in SE-A-402 948. However, the wheels of this carriage are supported by axles in turn supported in forks of the chassis of the carriage. Fluid pumps are provided on the carriage. These fluid pumps are connected to the axles supporting the wheels in a manner which is not clarified. However, it is reasonable to assume that some kind of coupling arrangement is used for joining the axles supporting the wheels to axles of the fluid pumps. The result of this structure is a substantial amount of complication as a consequence of the axle arrangement and, furthermore, it becomes comparatively troublesome to mount and dismount respectively the wheel.

### SUMMARY OF THE INVENTION

The object of the present invention is to provide a carriage having a favourable wheel suspension.

This object of the invention is obtained by the axle mounting the wheel projecting outwardly from the fluid pump body or housing and operating for axial and radial support of the wheel relative to the fluid pump and thereby relative to the carriage, axle bearings contained in the fluid pump thus also operating as the bearings for the wheel.

Further preferable features with regard to valve means and other arrangements for controlling the resistance exerted by the fluid pump to the rotation of the wheel are defined in the dependent claims.

### BRIEF DESCRIPTION OF THE DRAWINGS

With reference to the enclosed drawings, a more close description of an embodiment example of the invention will follow hereinafter.

In the drawings:
Fig 1 is a partially cut view of a portion of a training carriage illustrating the suspension of one of its wheels;
Fig 2 is a diagrammatical view of the fluid circuit according to the invention;
Fig 3 is a diagrammatical view illustrating the design of an electric control unit contained in the training device; and
Fig 4 is a diagrammatical view illustrating control and supervising possibilities of the device and, at the bottom, a training program which can be executed by means of the device.

### DETAILED DESCRIPTION OF A PREFERRED EMBODIMENT

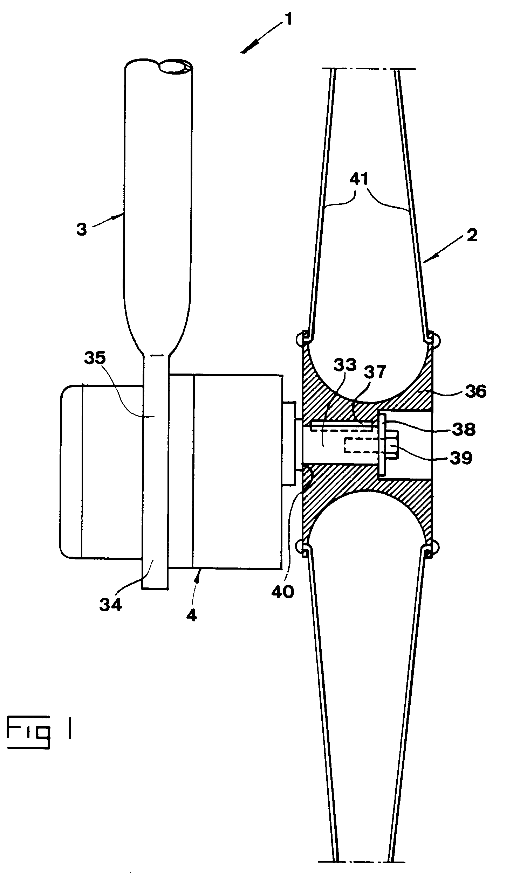

A portion of a training carriage 1 is illustrated in Fig 1, said carriage being intended to be pulled by a horse or other animal to be trained. The carriage is in practice a two-wheeler although only one wheel 2 appears in Fig 1. Furthermore, the carriage comprises a chassis only partially indicated, said chassis being adapted to be connected to the horse by means of shafts or the like and a seat for the driver being arranged on said chassis. The specific design of the carriage is not essential to the concept of the invention; any carriage or sulky design may in principle be used in connection with the invention.

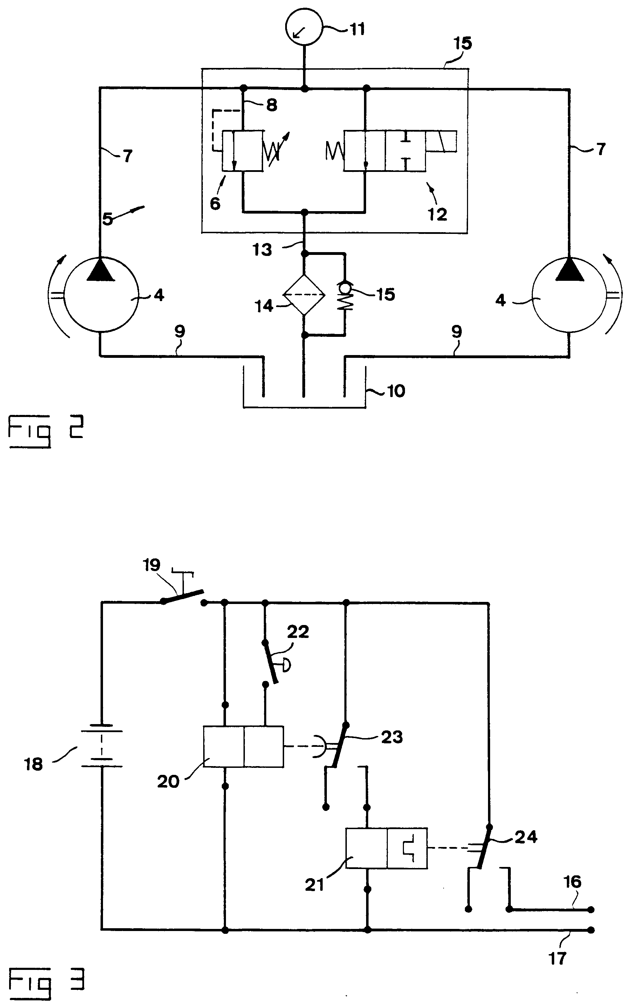

When the carriage is propelled the wheel 2 is put into rotation by its contact with the ground. A fluid pump 4 is connected to the wheel 2 and drivable thereby. In practice, the pump is a hydraulic pump. The hydraulic diagram is more specifically illustrated in Fig 2 and it appears also therefrom that two hydraulic pumps 4 are arranged, namely one for each of the wheels of the carriage.

Valve means 5 are arranged on the pressure side of the pumps for controlling the resistance exerted by the fluid pumps against rotation of the wheels. Said valve means comprise a pressure restriction valve 6 of the automatically operating constant pressure type, i.e. a valve to maintain a generally constant pressure on the pressure side of the pumps 4 independently, at least within a certain pump speed range, of the operational speed and thereby flow of the fluid pump. As appears from Fig 2, the pumps 4 are on their pressure side provided with lines 7, which run together and via a common line section 8 is in communication with the pressure restriction valve 6. It is to be pointed out that said valve is of a design known per se and used within other technical areas.

The suction sides of the pumps 4 communicate, in a manner conventional per se, via lines 9 with a hydraulic oil container 10 arranged at a suitable location on the carriage.

The pressure restriction valve 6 is adjustably designed as to the magnitude of the constant pressure. A manometer 11 is arranged on the pressure side of pumps 4 to deliver information regarding the pressure prevailing in the hydraulic oil volume between pumps 4 and pressure restriction valve 6. It is suitable to have the manometer 11 scaled in such a way that the measurement values which can be read give an appreciation of the traction force, which the braking resistance of the hydraulic pumps 4 give rise to in the shafts of the carriage or in another analogous coupling device between the carriage and the horse. Such a scaling makes it easier for the driver to make, based upon experience, such a correct readjustment of the valve 6 that the desired resistance against displacement of the carriage and being optimal for the training is exerted.

Besides, the valve means 5 comprise a regulatable valve member 12 for relieving the pressure on the pressure side of pumps 4. Said valve member 12 is more specifically constituted by a second regulatable valve arranged parallel to the pressure restriction valve 6, said valve member forcing, in a first closed position, the hydraulic oil on the pressure side of the pumps 4 to pass via the valve 6 and allowing, in a second poen position, hydraulic oil to pass through without having to pass through the pressure restriction valve 6. The valve 12 is accordingly formed by a two position valve being in open or closed position.

On the down stream side of the valves 6 and 12, lines extending from the valves run together into a common line 13, which via a filter 14 delivers the hydraulic oil to container 10. A check valve 15 is in a conventional manner arranged parallel to filter 14 and adapted to open in case the filter 14, e.g. due to clogging, causes a resistance to flow exceeding a certain level.

The valves 6 and 12 are preferably co-ordinated to a valve block indicated by means of the rectangle 15, control members for adjusting the constant pressure level of the pressure restriction valve 6 and for regulating the valve 12 between its two positions being accessibel on the exterior side of said block. In the most simple embodiment, these control members are conceived to be manually operable by the operator or driver. It is then preferred that the valve 12 is of such a design that it remains in one position, into which it has been adjusted by manual actuation, until the valve again is actuated for transfer to the alternative position.

The arrangement of the two position valve 12 has the essential advantage that the braking power may be regulated rapidly and efficiently in the sense that the braking power may be put on and off respectively without any need to carry out readjustment of the valve 6.

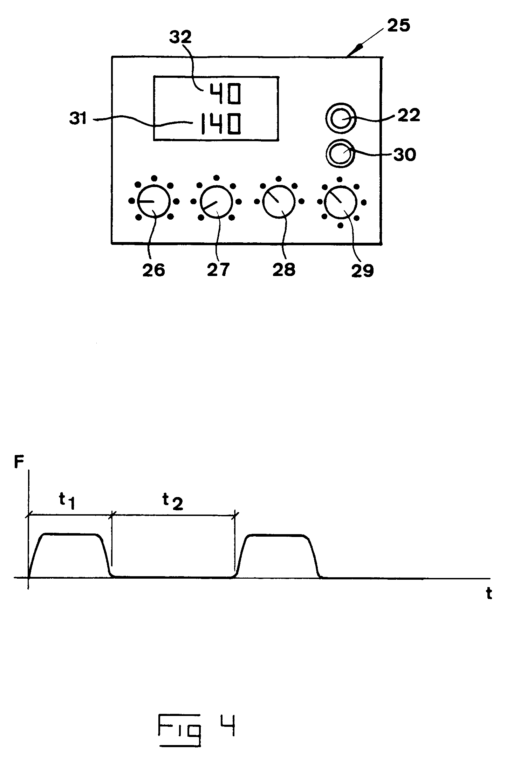

An example of a possible training program is illustrated at the bottom in Fig 4. The abscissa here refers to time whereas the ordinate refers to the braking power F. It may desirable during a first time period t1 to maintain a relatively high braking power so that accordingly the horse must work relatively hard. During this time period, the valve 12 in Fig 2 is accordingly closed whereas the valve 6 in dependence upon its adjustment maintains the braking power generally constant. During a subsequent time period t2 the braking power will then entirely be eliminated so that the horse will get a recovery period. Thus, the valve 12 in Fig 2 is open during this period so that the hydraulic oil flow generated by pumps 4 may flow to container 10 generally without resistance. This means that the resistance exerted in the system according to Fig 2 is generally only constituted by frictional and flow losses in the pumps and lines. Thereafter additional time periods t1, t2 etc will follow. In other words, the training program described will cause an efficient so called interval training which may be executed with a minimum amount of risk for damages on the horse since the horse does not have to conduct the training with a maximum speed.

In order to execute the training program illustrated at the bottom of Fig 4 with a manually controllable embodiment of the device according to the invention, the driver must, accordingly, operate the valve 12 between its two positions with desired intervals. Delays in the system result in the somewhat sloping flanks of the curve in Fig 4 without particular measures. Thereby the transition between the working periods with a high braking power and the recovery periods becomes lenient.

However, it is preferred according to the invention to provide a control unit programmable with a desired training program so that, accordingly, the driver does not have to carry out any adjustment operations during the training program proper provided that the training proceeds in a normal way. However, it is of course possible that the driver must intervene if it turns out that the horse either is not capable of managing the training program in question or has a considerably higher capacity than the one expected. In the former case the driver could reduce the pressure level determined by valve 6 by adjustment thereof and thereby reduce the braking power and in the latter case the braking power could be increased by adjusting valve 6.

The control unit according to Fig 3 comprises electrical output leads 16, 17 for control signals. These leads are connected to valve 12 so that when voltage is applied on the leads 16 and 17 valve 12 assumes one of its positions whereas in absence of supply voltage on leads 16 and 17 the valve assumes its second position. The device may for instance be such that the valve 12 may be arranged to normally be in its open position as a consequence of the spring diagrammatically indicated in Fig 2. However, when an actuation member associated to valve 12 receives supply voltage via leads 16 and 17 in Fig 3, the actuating member of valve 12 actuates the valve so that it is put into its second position, in which the valve closes hydraulic oil flow. It is to be pointed out that valve 12 of course could be of such a design that it simultaneously is operable manually by the driver and automatically by means of the control circuit illustrated in Fig 3.

The control unit according to Fig 3 receives supply voltage from a battery 18 and comprises suitably a main switch 19. Furthermore, the control unit comprises time regulating members 20, 21 to determine the duration of the entire training program and the duration of successive time periods t1 and t2 with and without braking power application. The control unit comprises a start switch 22, the actuation of which by the driver gives rise to initiation of the training program. The time delay member 20 is so designed that it comprises an adjustment member for adjusting the duration of the training program. Accordingly, when the driver actuates switch 22 the time regulating member 20 is put into operation and it closes then, by means of the switch 23, the current supply to the time regulating member 21, which has the character of a pause-run time relay. More specifically, the time regulating member 21 operates so that it, when it receives supply voltage, operates the switch 24 so that a supply voltage is obtained on leads 16 and 17 and accordingly the valve 12 is adjusted so that braking power application is obtained. Also the time regulating member 21 is adjustable as far as pause time and run time is concerned, i.e. adjustable as concerns t1 and t2 (Fig 4). When the adjusted time for t1 has expired, member 21 opens via switch 24 the current supply via leads 16 and 17 so as to initiate a pause period t2 and valve 12 is then also reversed so as to admit the hydraulic oil flow to pass through. In this way member 21 provides alternating closing and opening respectively of the current supply via leads 16 and 17 until the training program after expiration of the set time is interrupted by the member 21 braking the current supply to the member 21 via switch 23. The switch 24 of member 21 then brakes the supply via leads 16 and 17.

The control unit described and in accordance with Fig 3 has the decisive advantage that an experienced horse trainer in advance may establish the training programs to be executed and less skilled assisting personnel may then take care of the practical driving of the horse during the training program during execution thereof by the control unit according to Fig 3.

It should be pointed out in this connection that it would of course be possible to use, instead of the design of the control unit described in Fig 3, a computer which could be programmed with a great number of different training programs, among which the one aimed at for the time being could be selected.

At the top in Fig 4 a conceivable design of a control panel 25 is illustrated. The panel is located on the carriage so that it is conveniently accessible to the driver. A first control member 26 could have the purpose to enable adjustment of the duration of t1. A second control member 27 could serve for adjustment of the duration of t2. The control member 28 could be adapted to enable adjustment of the braking power during the time period t1, i.e. adjustment of the constant pressure value of valve 6. Finally, control member 29 could have the purpose to enable time adjustment of the duration of an entire training program, i.e. the running time of member 20.

For the rest, the control panel could comprise the switch 22 illustrated in Fig 3, by means of which the training program may be initiated and interrupted respectively. An additional control member 30 could be arranged for manual adjustment of the valve 12 between its positions. The control member 30 could be designed as being in direct mechanical contact with valve 12 or alternatively in indirect electrically operated connection to the valve.

Furthermore, it is preferable that control panel 25 comprises an indicator 31, which is associated to a pulse sensor arranged on the horse and which, accordingly, is adapted to display the pulse for the time being. An additional indicator 32 could be arranged to display the speed of the equipage. Furthermore, the device according to the invention could comprise or be connected to a registration device of the printer type or electronical memory type to be able to store relevant information about the training program. The load conditions illustrated with the assistance of Fig 4 and the pulse of the horse, which is indicative of the strain, are then primarily in view.

The use of the constant pressure valve 6 involves the advantage that the braking power is generally the same independently of the speed of the carriage and independently of the hydraulic pumps 4 being more or less worn. It is neither of any consequence to the actual braking power whether the temperature and accordingly the viscosity of the hydraulic oil varies during the execution of the training program due to heating by friction; the constant pressure valve 6 automatically compensates for such variations.

As appears from Fig 1, wheel 2 is mounted on an axle 33 projecting from the pump 4 and secured against rotation relative to said axle, whereas the body or housing 34 of the pump is attached to the carriage 1, e.g. by a bolt connection penetrating through a plate like portion 35 of the chassis 3 of the carriage. The projecting axle 33 of the pump 4 will thereby operate for axial and radial support of the wheel 2 relative to the pump and thereby relative to the carriage. The axle 33 projecting from the pump with one end allows a very simple mounting of the wheel 2. More specifically, the wheel 2 comprises a hub 36, which may be threaded onto the axle 33 and be secured thereto against relative rotation by means of a key 37 or similar. The internal cavity in the hub 36 comprises portions having two different diameters. A washer 38 contacts a shoulder formed in the transition between these two portions and a screw 39 penetrates the washer, abuts with its head against the washer and engages with its threaded shaft in an internally threaded hole in the extreme end of axle 33. Thus, the hub 36 is actuated towards an abutment 40 on the axle 33 by the screw 39 and washer 38. From what is described it appears that the wheel 2, the rim of which, not illustrated in Fig 1, may be connected to the hub 36 by spokes 41, rapidly and readily may be released from the axle 33 and that the pump 4 itself will act as a bearer of the wheel 2 relative to the chassis of the carriage.

The pump 4 is in the embodiment according to Fig 1 conceived to be secured in a rigid manner to a rigid chassis portion of the carriage. It would of course be possible to secure the pump 4 to such a carriage portion which could be resiliently movably connected to the carriage chassis so that in this way a resilient wheel suspension would be obtained. Said carriage portion could for instance have the character of an arm resiliently pivotable in a vertical plane.

It is evident that numerous modifications of the designs described are possible within the scope of the inventive concept as defined by the claims.

## Claims

1. A carriage adapted for training horses and comprising at least one wheel (2), which is put into rotation by its contact with the ground when the carriage is driven and which is mounted on an axle (33) and secured against relative rotation thereto and drivingly connected to a fluid pump (4) arranged to exert a resistance to rotation of the wheel, a body or housing (34) of the fluid pump (4) being attached to the carriage, *characterized* in that the axle (33) mounting the wheel (2) projects outwardly from the fluid pump body or housing (34) and operates for axial and radial support of the wheel relative to the fluid pump and thereby relative to the carriage, axle bearings contained in the fluid pump thus also operating as the bearings for the wheel.

2. A carriage according to claim 1, comprising valve means (5) on the pressure side of the pump for controlling the resistance exerted by the fluid pump to the rotation of the wheel, *characterized* by said valve means comprising a pressure restriction valve (6) of automatically operating constant pressure type, i.e. a valve for maintaining a generally constant pressure on the pressure side of the fluid pump (4) independently, at least within a certain pump speed interval, of the operational speed and thereby flow of the fluid pump.

3. A carriage according to claim 1 or 2, *characterized* in that the carriage has two wheels and that each of its wheels is arranged to drive a respective fluid pump (4).

4. A carriage according to claim 2, *characterized* in that the pressure restriction valve (6) is adjustably designed as to the magnitude of the constant pressure.

5. A carriage according to any of claims 2-4, *characterized* by said valve means comprising regulatable valve members (12) for relieving pressure on the pressure side of the fluid pump.

6. A carriage according to any of claims 2-5, *characterized* in that a second regulatable valve (12) is arranged parallel to the pressure restriction valve (6) and adapted to force, in a first closed position, the fluid on the pressure side of the pump to pass via the pressure restriction valve and adapted to, in a second open position, admit fluid to pass through without the fluid having to pass through the pressure restriction valve.

7. A carriage according to claim 6, *characterized* in that it comprises a control unit programmable with a desired training program comprising braking power application, which varies in time, on the wheel by means of the resistance of the fluid pump, and that the control unit is connected to the second valve (12) to control the execution of the training program by regulating the second valve.

8. A carriage according to claim 7, *characterized* in that the control unit comprises time regulating members (20, 21) for determining the length of the training program and the length of successive periods of time with and without braking power application.

## Patentansprüche

1. Kutsche zum Trainieren von Pferden, mit wenigstens einem Rad (2), das bei Fahrt der Kutsche durch Berührung mit dem Boden in Drehungen versetzbar ist, das an einer Achse (33) befestigt ist, das gegen Relativverdrehung zu ihr gesichert ist und das in Antriebsverbindung mit einer Fluidpumpe (4) steht, die einen Verdrehwiderstand auf das Rad ausübt, wobei ein Kasten oder Gehäuse (34) der Fluidpumpe (4) an der Kutsche befestigt ist, dadurch gekennzeichnet, dass die das Rad (2) tragende Achse (33) sich vom Fluidpumpenkasten oder Gehäuse (34) aus nach aussen erstreckt und die axiale und radiale vom Rad ausgehende Belastung relativ zur Fluidpumpe und damit zur Kutsche aufnimmt, wobei in der Fluidpumpe vorgesehene Achslager ebenfalls als Radlager dienen.

2. Kutsche nach Anspruch 1, mit einer auf der Druckseite der Pumpe angeordneten Ventilanordnung (5) zur Steuerung des von der Fluidpumpe der Radverdrehung entgegengesetzten Widerstandes, dadurch gekennzeichnet, dass die Ventilanordnung ein automatisch einen konstanten Druck einhaltendes Druckbegrenzungsventil (6) aufweist, d.h. ein Ventil zur Aufrechterhaltung eines im allgemeinen konstanten Drucks auf der Druckseite der Fluidpumpe (4) unabhängig, zumindest innerhalb eines vorgegebenen Pumpengeschwindigkeitsbereichs, von der Betriebsgeschwindigkeit und damit des Durchflusses durch die Fluidpumpe.

3. Kutsche nach Anspruch 1 oder 2, dadurch gekennzeichnet, dass sie zwei Räder aufweist und dass jedes Rad in Antriebsverbindung mit einer eigenen Fluidpumpe (4) steht.

4. Kutsche nach Anspruch 2, dadurch gekennzeichnet, dass das Druckbegrenzungsventil (6) hinsichtlich der Grösse des konstanten Drucks einstellbar ist.

5. Kutsche nach einem der Ansprüche 2 bis 4, dadurch gekennzeichnet, dass die Ventilanordnung einstellbare Ventilteile (12) aufweist zur Verringerung des Drucks auf der Druckseite der Fluidpumpe.

6. Kutsche nach einem der Ansprüche 2 bis 5, dadurch gekennzeichnet, dass ein zweites einstellbares Ventil (12) parallel zum Druckbegrenzungsventil (6) angeordnet ist, welches in einer ersten geschlossenen Stellung dafür sorgt, dass das Fluid auf der Druckseite der Pumpe das Druckbegrenzungsventil durchsetzt und das in einer zweiten offenen Stellung dafür sorgt, dass das Fluid durchfliesst ohne das Druckbegrenzungsventil zu durchsetzen.

7. Kutsche nach Anspruch 6, dadurch gekennzeichnet, dass sie eine programmierbare Steuereinheit aufweist mit dem gewünschten Trainingsprogramm einschliesslich einer Bremskraftanwendung, welche zeitvariabel auf die Räder mittels des von der Fluidpumpe ausgeübten Widerstandes wirkt und dass die Steuereinheit mit dem zweiten Ventil (12) verbunden ist zur Steuerung der Durchführung des Trainingsprogramms mittels Einwirkung auf das zweite Ventil.

8. Kutsche nach Anspruch 7, dadurch gekennzeichnet, dass die Steuereinheit Zeitschaltteile (20, 21) aufweist zur Bestimmung der Dauer des Trainingsprogramms und der Dauer aufeinanderfolgender Zeiträume mit und ohne Anwendung einer Bremskraft.

## Revendications

1. Chariot prévu pour entraîner des chevaux et comportant au moins une roue (2), qui est mise en rotation par son contact avec le sol lorsque le chariot est tiré et qui est montée sur un axe (33) et fixée à l'encontre d'une rotation relative sur celui-ci et reliée pour entraînement à une pompe à fluide (4) prévue pour exercer une résistance à la rotation de la roue, un corps ou boîtier (34) de la pompe à fluide (4) étant fixé sur le chariot, caractérisé en ce que l'axe (33) supportant la roue (2) dépasse à l'extérieur du corps ou boîtier de pompe à fluide (34) et sert à supporter axialement et radialement la roue par rapport à la pompe à fluide et ainsi par rapport au chariot, des paliers d'axe contenus dans la pompe à fluide servant également de paliers pour la roue.

2. Chariot selon la revendication 1, comportant des moyens de soupape (5) sur le côté de pression de la pompe afin de commander la résistance exercée par la pompe à fluide sur la rotation de la roue, caractérisé en ce que lesdits moyens de soupape comportent une soupape de limitation de pression (6) du type à pression constante fonctionnant automatiquement, c'est-à-dire une soupape destinée à maintenir une pression globalement constante sur le côté de pression de la pompe à fluide (4) indépendamment, au moins dans un certain intervalle de vitesse de pompe, de la vitesse opérationnelle et ainsi de l'écoulement de la pompe à fluide.

3. Chariot selon la revendication 1 ou 2, caractérisé en ce que le chariot a deux roues et que chacune de ses roues est prévue pour entraîner une pompe à fluide (4) respective.

4. Chariot selon la revendication 2, caractérisé en ce que la soupape de limitation de pression (6) est conçue de façon réglable en ce qui concerne l'amplitude la pression constante.

5. Chariot selon l'une quelconque des revendications 2 à 4, caractérisé en ce que lesdits moyens de soupape comportent des éléments de soupape pouvant être régulés (12) afin de relâcher la pression du côté de pression de la pompe à fluide.

6. Chariot selon l'une quelconque des revendications 2 à 5, caractérisé en ce qu'une deuxième soupape pouvant être régulée (12) est prévue parallèlement à la soupape de limitation de pression (6) et prévue pour forcer, dans une première position fermée, le fluide sur le côté de pression de la pompe à passer par la soupape de limitation de pression et prévue pour, dans une deuxième position, permettre à du fluide de passer sans que le fluide ait à passer par la soupape de limitation de pression.

7. Chariot selon la revendication 6, caractérisé en ce qu'il comporte une unité de commande programmable avec un programme d'entraînement souhaité comportant une application de puissance de freinage, qui varie avec le temps, sur la roue au moyen de la résistance de la pompe à fluide, et en ce que l'unité de commande est reliée à la deuxième soupape (12) afin de commander l'exécution du programme d'entraînement en régulant la deuxième soupape.

8. Chariot selon la revendication 7, caractérisé en ce que l'unité de commande comporte des éléments de régulation du temps (20, 21) destinés à déterminer la longueur du programme d'entraînement et la durée des périodes successives avec et sans application de puissance de freinage.
